# EUROPEAN PATENT SPECIFICATION

(11) **EP 1 648 835 B1**
(45) Date of publication and mention of the grant of the patent: **30.12.2015**
(21) Application number: 04742098.9
(22) Date of filing: 10.06.2004
(51) Int. Cl.: C03B 27/044, C03B 29/08, C03B 25/08, C03B 35/16

(54) **METHOD FOR OBSERVING A GLASS AND CONTROLLING HEATING EFFECT IN A HARDENING OVEN FOR A GLASS SHEET**
VERFAHREN ZUR BEOBACHTUNG EINES GLASES UND STEUERUNG DER HEIZWIRKUNG IN EINEM HÄRTUNGSOFEN FÜR EINE GLASSCHEIBE
PROCEDE D'OBSERVATION DU VERRE ET DE REGULATION DE LA PRODUCTION DE CHALEUR DANS UN FOUR DE CUISSON DE FEUILLES DE VERRE

(30) Priority: 11.06.2003 FI 20030875
(43) Date of publication of application: 26.04.2006
(73) Proprietor: Glaston Finland Oy, 33730 Tampere (FI)
(72) Inventor: LAMMI, Petri, FI-39200 Kyröskoski (FI)
(74) Representative: LEITZINGER OY
(86) International application number: PCT/FI2004/000355
(87) International publication number: WO 2004/108614

(56) References cited:
- EP-A2- 0 476 693
- EP-A2- 0 937 687
- WO-A1-92/12099
- WO-A1-97/44282
- US-A- 5 368 624
- US-B1- 6 427 488

## Description

The invention relates to a method to detect the glass sheet and to regulate the heating effect of heating elements in a sheet glass hardening furnace, which furnace comprises a glass heating section, a transportation rail to transport the glass to and from the said heating section and said heating elements to heat the glass by radiation and air blast, and a control system to control the hardening process of the glass in a furnace.

Previously known is from the Finnish patent publication FI-106256 to direct the heating on the glass sheet in a hardening furnace, when the loading pattern of glass sheets approaching the furnace has been read in advance, for instance from the loading table or in moving them to the furnace, the loading pattern is entered to the memory of the control system. On basis of the loading pattern additional heating is regulated to the centre of the glass sheets.

The disadvantage of such an arrangement is that it ought to be possible by means of the read loading pattern to distribute the heating air blast properly from the nozzles to areas, where glass surface locates. This is difficult, because the solution of the above mentioned publication has additional heating with radiation heaters and this radiation is conducted controllably to the centre of glass sheets. The disadvantage of the solution is the need of additional heaters and needed separate control system.

Further is known from publication WO 2004/087593 a convection furnace for tempered glass sheet, into which furnace the glass sheet arrives along a conveyor as on rolls, and the furnace has also heating elements in the channels for heating the blast air. A blast apparatus is blasting said air against the glass sheet. The blast channeling comprises elongated channels in the glass sheet transport direction. The heating elements are located inside said channels. The system has not any detecting systems for detecting the location of the glass load or location of separate glass sheets. **Therefore, regulation of the heating elements cannot be based on location of the glass sheets. This results to the following problems. Heating of glass depends on local loading scheme, because the heating elements heat evenly the whole furnace area. Those areas of the glass load, which have less glass than the other load areas in the glass sheet transport direction, and also the edge areas of the glass load, heat up more than the other load areas. In addition, the surfaces of rollers, heating elements etc. at the areas which are empty of glass, heat up more than at the areas of glass load. This causes uneven heating also of the next glass load when it is partly at said more heated up areas.**

**The present invention aims to solve the above discussed problems.**

By means of the method according to the invention the reading of the loading patterns going to and being in the furnace is solved and, furthermore, focusing the heating on the glass sheets can be corrected even during heating without any additional heaters. The method according to the invention is characterized in that what is presented in the characterizing portion of the claim 1.

The advantage as per the method of the invention is that the existence and position of the glass sheets can be read with sufficient accuracy in the simple way introduced by the invention, whereby the effect of the heating elements can be regulated and focused to the glass sheets. When the glass sheet position and existence in the furnace is measured by means of temperature detectors all the time it is possible even to change the impact of heating on different areas so that all glass sheets would at the same time be at hardening temperature or all spots of a bigger glass sheet would reach the hardening temperature at the same time.

In the following the invention disclosed with reference to the enclosed drawing, where
Figure 1 shows a section view of the hardening furnace seen diagonally.
Figure 2 shows hot air blast channels seen from the end.
Figure 3 shows heating lines and glass sheets in the furnace seen from above.

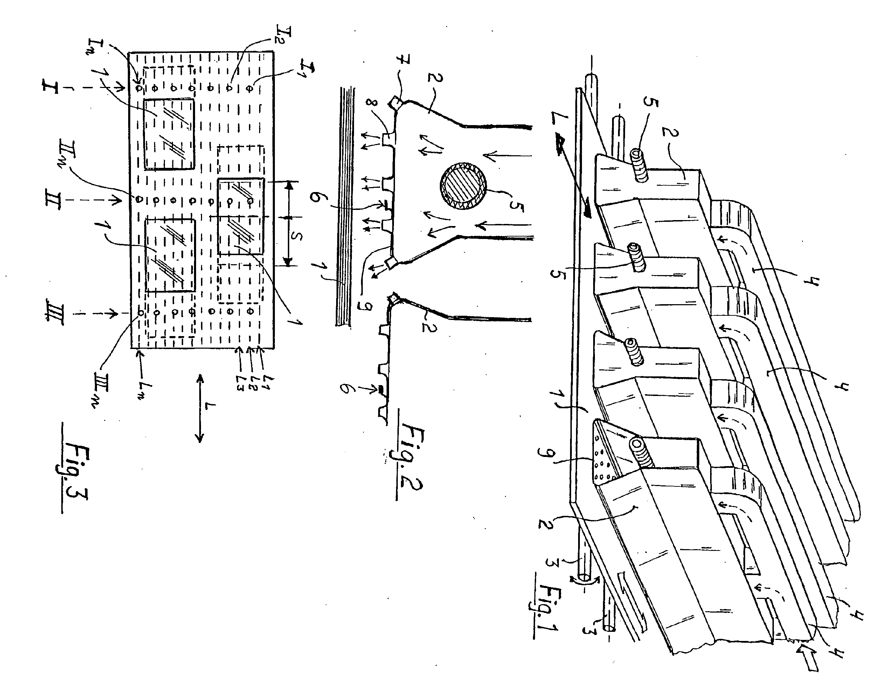

In figure 1 a part of the glass tempering furnace is shown, which furnace comprises walls (not shown) and a conveyor formed of rotating rolls 3, on which glass sheet 1 is movable in a way wanted during and after the process. In order to convey blast air to glass 1 surface the furnace has oblong channels 2, which in this example are fitted in glass 1 direction L. To the channels 2 blast air is brought from one or several blowers along distribution channels 4. Into the channels 2 heating elements 5 are placed in the direction of channels 2. The channels 2 widen downward under heating elements 5 and get into bottom parts which have holes. At least bottom part 9 is of thin plate with openings 7, 8 punched in it, most suitably so that also collars downward around the holes have been made (figure 2) with the punching tool.

In the channels 2 the heating elements 5 are in relatively strong air blast and the air blast runs close pass elements 5. At the elements the blast air runs heated through bottom part 9 openings towards the glass 1. Thanks to the widened bottom part 9 the coverage of blast holes 8 on the glass surface becomes large. Between the channels 2 a sufficient space remains for the return air to flow towards the suction face of the blower.

In figure 2 the fitting situation of the channels 2 is shown directly from their end. The distance between the bottom part 9 and the glass 1 is adjusted to about 50 - 70 mm. In the immediate vicinity of the bottom part 9, however not touching it, the detectors 6 are fitted to measure the air temperature between the bottom part 9 and the glass or the air temperature between the bottom part 9 and the conveyor, if there is no glass at that place. The detector is placed about 10 - 50 mm above the glass/conveyor.

When the furnace is in continuous use, its airspace temperature is hundreds of C grades all the time. The conveyor 3 is also hot all the time. On bringing the glass sheet 1 or several glass sheets to the furnace, the temperature detector 6 above the glass reacts at once to the existence of cold glass. A detector 6 that has under it only one transportation roll does hardly react to temperature change, when glass sheets are approaching the furnace. Placing a sufficient number of temperature detectors 6 above the conveyor a reliable pattern is received from their indications when there in the furnace is glass surface or not.

Figure 3 shows a positioning of the detectors 6 in lines L1 - Ln. In the figure in each of them three detectors 6 per line are shown. The directions of lines L are the same as the directions of heating elements 5 and also the directions of the glass are the same and the oscillation directions, too. The number of lines L, which have detectors 6, can be the same as the number of channels 2 or less.

In one embodiment the average temperature is calculated from the indications of each line L1 - Ln of detectors L_{I}, Ln and L_{III}, which average is used by the control system for estimation of the size of the glass surface below them. If there is glass surface under all three detectors 6 even all the time during the oscillation travel, there is on line L the lowest temperature average.

The less glass surface under detectors 6 of some line L the higher the average temperature. The control system is programmed to regulate the heating elements of each line L on basis of the average temperatures. The special advantage of the invention appears in that the information of temperature sent by the detectors is received all the time during the heating cycle. Then, if necessary, the control system is programmed to correct the distribution of the heating effect during heating, if the temperature averages do not rise in the way set. For instance if needed, the effects of the heating elements in the directions of lines L are changed by means of fuzzy control so that glass sheets 1 would reach hardening temperature at the same time. When detectors 6 are very close to the glass surface, the impact of a glass little colder than another glass in the furnace gets to detector 6 as different indication in spite of that there is strong flow of hot blast air from beside detector 6 to the glass. The air flow hits the glass, cools a little and the return flow or part of it that has hit the glass hits detector 6, whereby from the detector lower temperature information is received than from the other detector. When there is still from all detectors 6 direct radiation visibility to the glass 1, the different temperatures of glass sheets will also influence the detectors differently due to different radiation effects. On basis of data from the detectors it is possible to distinguish temperature differences under 20°C among glass surfaces.

On line L several detectors 6 can be placed. When the glass sheets 1 make oscillation, distance s, figure 3, there may be glass surface below detectors 6 all the time. Then all detectors remain in low temperatures. If during oscillation the glass sheet moves a little at one detector, it has an immediate, temperature -increasing effect on the detector. The average glass load of each line L can be found out from the separate temperatures of the detectors or also even from their calculated average. If heating elements 5 are uniform in length of the furnace in line L direction, they can be regulated on basis of the temperature average of line L.

In one embodiment there can be in line L direction heating elements, many ones controlled separately one after another, whereby each element has a counter detector 6 placed fairly under it. Then by means of the separate regulation the heating can be focused on the glass still more accurately, using the temperature data received from the detector.

## Claims

1. A method of detecting the existence and position of a glass sheet (1) to be heated and to regulate the heating effect of the heating elements (5) in a glass sheet hardening furnace, which furnace comprises a glass heating section, a conveyor (3) to transport the glass sheet (1) to and from the said heating section, and said heating elements (5) by which the glass sheets is heated by radiation and convection wherein an air blast realized by means of a blower and air channels (2) are heated by said elements (5) being positioned in said air channels, and a furnace control system to control the hardening process of the glass sheet (1), **characterized in that** the existence and position in the furnace of one or several glass sheets (1) are detected by means of temperature detectors (6), by means of which the air temperatures in the heating section above the conveyor (3) are measured, whereby the existence and position of the glass sheet in the furnace is indicated by decreasing temperatures measured by the temperature detectors (6) and the heating effect of those separately regulated heating elements (5) which are positioned above the detected temperature decreasing due to the glass sheet (1), is raised by the furnace control.

2. A method according to claim 1, **characterized in that** temperature detectors (6) are positioned in the furnace one after another essentially in the transport direction (L) of the glass sheet (1).

3. A method according to claim 1, **characterized in that** there are several temperature detectors (6) arranged side by side in parallel glass sheet transport direction lines (L1 - Ln).

4. A method according to claim 1, **characterized in that** there are at least three temperature detectors (6) one after another in the same glass sheet transport direction line (L).

5. A method according to claim 1, **characterized in that** the temperature detectors (6) are located about 10-50 mm above the conveyor (3).

6. A method according to claim 1, **characterized in that** as a temperature indication of each line (L) the calculated average indication of all temperature detectors (L_{I}, L_{II}. L_{M}) located in said line (L) is taken.

7. A method according to claim 1, **characterized in that** the glass sheet load in each line (L) is concluded from the calculated average temperature of each line (L).

8. A method according to claim 1, **characterized in that** the average temperatures are calculated during the heating cycle separately from each line (L1 - Ln) and the effects of the heating elements of needed lines (L1 - Ln) are regulated depending on said average temperatures.

9. A method according to claim 1, **characterized in that** the temperature-measuring detectors (6) are placed above the conveyor (3) in such positions from where free radiation visibility down onto the glass sheet (1) or conveyor (3) is achieved.

## Patentansprüche

1. Verfahren zum Detektieren der Existenz und Position einer Glasscheibe (1), die erwärmt werden soll, und Verfahren, um die Heizwirkung der Heizelemente (5) in einem Härtungsofen für eine Glasscheibe zu regulieren, wobei der Ofen einen Heizabschnitt für Glas, ein Fördermittel (3), um die Glasscheibe (1) zu und von dem Heizabschnitt zu transportieren, und die Heizelemente (5) umfasst, durch die die Glasscheibe durch Strahlung und Konvektion erwärmt wird, wobei Blasluft, die mittels eines Gebläses und mittels Luftkanäle (2) erzeugt wird, durch die Elemente (5), die in den Luftkanälen positioniert sind, erwärmt wird, und wobei der Ofen ein Ofensteuersystem umfasst, um den Härtungsprozess der Glasscheibe (1) zu steuern, **dadurch gekennzeichnet, dass** die Existenz und Position in dem Ofen von einer oder mehreren Glasscheiben (1) mittels von Temperaturdetektoren (6) detektiert werden, mittels derer die Lufttemperaturen in dem Heizabschnitt über dem Fördermittel (3) gemessen werden, wodurch die Existenz und Position der Glasscheibe in dem Ofen angezeigt wird durch abnehmende Temperaturen, die durch die Temperaturdetektoren (6) gemessen werden, und dass die Heizwirkung dieser getrennt regulierten Heizelemente (5), die oberhalb der detektierten Temperatur, die auf Grund der Glasscheibe (1) abnimmt, positioniert sind, durch die Ofensteuerung erhöht wird.

2. Verfahren nach Anspruch 1, **dadurch gekennzeichnet, dass** die Temperaturdetektoren (6) in dem Ofen hintereinander im Wesentlichen in der Transportrichtung (L) der Glasscheibe (1) angeordnet sind.

3. Verfahren nach Anspruch 1, **dadurch gekennzeichnet, dass** mehrere Temperaturdetektoren (6) vorhanden sind, die Seite an Seite in parallelen Transportrichtungslinien (L1-Ln) der Glasscheibe angeordnet sind.

4. Verfahren nach Anspruch 1, **dadurch gekennzeichnet, dass** mindestens drei Temperaturdetektoren (6) hintereinander in derselben Transportrichtungslinie (L) vorhanden sind.

5. Verfahren nach Anspruch 1, **dadurch gekennzeichnet, dass** die Temperaturdetektoren (6) etwa 10-50 mm über dem Fördermittel (3) angeordnet sind.

6. Verfahren nach Anspruch 1, **dadurch gekennzeichnet, dass** als eine Temperaturanzeige jeder Linie (L) die berechnete Durchschnittsanzeige von allen Temperaturdetektoren (L_{I}, L_{II}, L_{M}) in der Linie (L) genommen wird.

7. Verfahren nach Anspruch 1, **dadurch gekennzeichnet, dass** die Glasscheibenbeladung in jeder Linie (L) aus der berechneten Durchschnittstemperatur jeder Linie (L) gefolgert wird.

8. Verfahren nach Anspruch 1, **dadurch gekennzeichnet, dass** die Durchschnittstemperaturen während des Heizzyklus getrennt von jeder Linie (L1-Ln) berechnet werden, und dass die Wirkungen der Heizelemente der benötigten Linien (L1-Ln) in Abhängigkeit von den Durchschnittstemperaturen reguliert werden.

9. Verfahren nach Anspruch 1, **dadurch gekennzeichnet, dass** die die Temperatur messenden Detektoren (6) über dem Fördermittel (3) in solchen Positionen angeordnet werden, von denen eine freie Sichtbarkeit bis hinunter auf die Glasscheibe (1) oder auf das Fördermittel (3) erreicht wird.

## Revendications

1. Procédé pour détecter la présence et la position d'une feuille de verre (1) à chauffer et pour réguler l'effet thermique des éléments chauffants (5) dans un four de trempe de feuilles de verre, lequel four comprend une section de chauffage de verre, un moyen de transport (3) pour transporter la feuille de verre (1) vers ladite section de chauffage et à partir de celle-ci, et lesdits éléments chauffants (5) grâce auxquels la feuille de verre est chauffée par rayonnement et convection où un vent de soufflage réalisé au moyen d'une soufflante et des conduits d'air (2) sont chauffés par lesdits éléments (5) positionnés dans lesdits canaux d'air, et un système de contrôle de four pour contrôler le processus de trempe de la feuille de verre (1), **caractérisé en ce que** la présence et la position dans le four d'une ou plusieurs feuilles de verre (1) sont détectées à l'aide de capteurs de température (6) grâce auxquels les températures de l'air dans la section de chauffage au-dessus du moyen de transport (3) sont mesurées, moyennant quoi la présence et la position de la feuille de verre dans le four est indiquée par des températures en baisse mesurées par les capteurs de température (6), et l'effet thermique de ceux des éléments chauffants (5) régulés séparément qui sont positionnés au-dessus de la température en baisse détectée du fait de la feuille de verre (1), étant augmenté grâce au contrôle du four.

2. Procédé selon la revendication 1, **caractérisé en ce que** les capteurs de température (6) sont positionnés dans le four, l'un après l'autre, sensiblement dans la direction de transport (L) de la feuille de verre (1).

3. Procédé selon la revendication 1, **caractérisé en ce qu'**il y a plusieurs capteurs de température (6) disposés côte à côte sur des lignes de direction de transport de feuilles parallèles (L1-Ln).

4. Procédé selon la revendication 1, **caractérisé en ce qu'**il y a au moins trois capteurs de température (6), l'un après l'autre, sur la même ligne de direction de transport de feuille de verre (L).

5. Procédé selon la revendication 1, **caractérisé en ce que** les capteurs de température (6) sont situés à près de 10-50 mm au-dessus du moyen de transport (3).

6. Procédé selon la revendication 1, **caractérisé en ce que**, en guise d'indication de température de chaque ligne (L), on prend l'indication moyenne calculée de tous les capteurs de température (L_{I}, L_{II}, L_{M}) situés sur ladite ligne (L).

7. Procédé selon la revendication 1, **caractérisé en ce que** la charge en feuilles de verre dans chaque ligne (L) est déduite d'après la température moyenne calculée de chaque ligne (L).

8. Procédé selon la revendication 1, **caractérisé en ce que** les températures moyennes sont calculées pendant le cycle de chauffage de manière séparée pour chaque ligne (L1 - Ln), et les effets des éléments chauffants de lignes (L1 - Ln) nécessaires étant régulés en fonction desdites températures moyennes.

9. Procédé selon la revendication 1, **caractérisé en ce que** les capteurs de mesure de température (6) sont placés au-dessus du moyen de transport (3) dans des positions à partir desquelles on obtient une visibilité du rayonnement dégagée vers le bas sur la feuille de verre (1) ou le moyen de transport (3).
